# NOUVEAU FASCICULE DE BREVET EUROPEEN

(11) **EP 0 229 575 B2**
(45) Date de publication et mention de la décision concernant l'opposition: **23.12.1998**
(45) Mention de la délivrance du brevet: 23.01.1991
(21) Numéro de dépôt: 86420282.5
(22) Date de dépôt: 20.11.1986
(51) Int. Cl.: B23K 35/40, B23K 35/365, B23K 35/32

(54) **Baguette souple de soudage à âme métallique enrobée, procédé pour sa réalisation**
Flexibler ummantelter Schweissstab mit einem metallischen Kern, Verfahren zu dessen Herstellung
Flexible coated weld rod with a metallic core, method for manufacturing it

(30) Priorité: 21.11.1985 FR 8517809
(43) Date de publication de la demande: 22.07.1987
(73) Titulaire: TECHNOGENIA S.A., 74410 Saint-Jorioz (FR)
(72) Inventeur: Maybon, Guy, F-74410 Saint-Jorioz (FR)
(74) Mandataire: Poncet, Jean-François

(56) Documents cités:
- CH-A- 299 790
- DE-C- 874 888
- DE-C- 2 461 591
- FR-A- 1 003 435
- FR-A- 1 176 130
- FR-A- 1 248 700
- FR-A- 2 081 169
- FR-A- 2 255 991
- GB-A- 1 007 039
- US-A- 2 107 434
- US-A- 2 219 642
- Prospectus de Technogenia de juin 1982 concernant les baguettes Technodur
- Pospectus de Hoechst sur Tylose MH-K-Marken de juillet 1985
- Prospectus Castolin de 1973

## Description

La présente invention concerne selon un premier aspect une baguette pour soudage à l'aide d'une source extérieure d'énergie calorifique telle qu'une flamme chimique ou une flamme plasma du type énoncé dans le préambule de la revendication 1. Une baguette de ce genre est connue par un usage antérieur illustré par le prospectus "Technodur" de la société Technogénia de juin 1982. Par exemple, la source d'énergie peut être un chalumeau oxyacétylénique, un procédé TIG, un chalumeau dit à hydrogène atomique, ou autres variantes faisant appel à l'ionisation d'un gaz.

Le brevet US-A-2 219 462 décrit deux exemples de produits de soudure, qui se présentent généralement sous forme de baguettes rigides, de quelques dizaines de centimètres de longueur.

Dans le premier exemple, les baguettes comprennent une âme métallique revêtue d'un enrobage contenant les constituants principaux de soudure sous forme de poudre liés ensemble et à l'âme métallique par des liants silicatés.

Dans le second exemple, les baguettes composites sont constituées de tubes métalliques remplis d'un élément d'apport de composition différente, contenant par exemple des carbures de tungstène. De telles baguettes sont également rigides, et de longueur limitée.

Le document FR-A-1 003 435 décrit un procédé de fabrication d'électrode rigide comprenant un fil d'âme revêtu d'un enrobage comportant les constituants principaux de soudure sous forme de poudres liées ensemble et à l'âme métallique par des liants silicatés.

Le fait que les baguettes sont discontinues réduit sensiblement la productivité des opérations manuelles de soudage nécessitant l'emploi de grandes quantités de produits, comme par exemple l'opération de rechargement dur de surfaces de pièces de dimensions importantes. En effet, à chaque baguette, l'opérateur est contraint d'abandonner une chute d'extrémité pour éviter de se brûler, ou alors il doit rabouter la chute à l'extrémité de la baguette suivante, opération fastidieuse qui peut s'avérer difficile.

La présente invention a notamment pour objet d'éviter les inconvénients des procédés et dispositifs connus, en proposant des moyens permettant d'améliorer sensiblement la productivité des opérations de soudage ou de rechargement. En particulier, l'invention permet de réaliser un produit de soudure de grande longueur à âme métallique enrobée, appelé baguette continue, par exemple de plusieurs dizaines de mètres, suffisamment souple pour être conditionné en bobine être enroulé et déroulé, et dans lequel les constituants principaux de soudure sont contenus dans l'enrobage.

La présente invention procure des avantages substantiels par rapport aux produits connus dans lesquels les constituants principaux de soudure sont contenus soit à l'intérieur d'un tube métallique soit dans un enrobage entourant une âme métallique. En effet, ces produits sont très peu flexibles, de sorte que l'on ne peut pas les enrouler ou dérouler pour former une bobine de dimensions raisonnables, suffisamment petite pour permettre la manutention.

La baguette continue selon l'invention est très flexible en comparaison des produits connus, en particulier des produits à âme métallique enrobée dans les constituants principaux de soudure, produits qui sont courts et rigides.

Dans le domaine du soudage à l'arc ou de la brasure, on connait des produits de soudure relativement flexibles à âme métallique enrobée. Il en est ainsi des produits décrits dans les documents GB-A-1 007 039 et US-A-2 107 434. Toutefois, dans ces produits connus, les constituants principaux de soudure sont constitués par l'âme métallique elle-même de la baguette ; l'enrobage contient les éléments secondaires, c'est-à-dire soit le flux de brasage, soit les produits destinés à créer une enveloppe gazeuse protectrice lors de la soudure à l'arc. L'âme est relativement épaisse, tandis que l'enrobage est relativement mince, de sorte qu'une flexibilité relativement importante est obtenue sans grande difficulté. La composition constituant l'enrobage de ces produits connus, dans leur état final, ne permet pas de réaliser un enrobage épais et flexible contenant les constituants principaux de soudure. En effet, dans leur état final, ces produits ne contiennent ni liant, ni plastifiant.

Le document DE-C-874 888 décrit une électrode continue de soudage obtenue par extrusion d'un enrobage autour d'un fil d'âme métallique chauffé par conduction électrique ou induction. Aucune indication n'est donnée sur la composition de l'enrobage.

L'une des difficultés principales pour atteindre une flexibilité suffisante permettant le conditionnement en bobines, réside dans le fait que les constituants principaux de soudure sont contenus dans l'enrobage. La baguette continue doit en effet comporter une âme métallique relativement mince et un enrobage relativement épais. Malgré son épaisseur, l'enrobage doit être flexible et résistant.

Les utilisateurs sont habitués à des baguettes à âme métallique enrobée rigides et relativement solides. Ainsi, l'invention a également pour objet de réaliser des baguettes souples à âme métallique enrobée qui peuvent être manipulées et transportées sans précautions particulières, c'est à dire dans lesquelles on n'observe pas de rupture importante et gênante de l'enrobage ou de la totalité du produit dans les conditions habituelles de manutention et d'utilisation. Il est en effet important que l'enrobage ne présente pas de rupture, car cela conduit à un soudage irrégulier et de mauvaise qualité.

Il est également important d'éviter l'influence néfaste, au plan du soudage, du fil métallique formant l'âme de la baguette. En effet, le fil métallique fond en général à une température plus élevée que l'enrobage. Selon l'invention, on cherche des moyens pour réduire le diamètre de ce fil et accélérer ainsi sa fusion.

Cependant, en cherchant à réduire le diamètre du fil, on se heurte au problème de son guidage lors de la fabrication de la baguette. Le guidage de l'âme dans la machine doit s'effectuer sans flambage ni enrayage. L'invention vise à résoudre ce problème en prévoyant des moyens permettant le passage d'une âme très mince dans une machine à enrober les électrodes, machine bien connue dans la technique et utilisée pour réaliser les produits de soudure. Il faut en particulier assurer un approvisionnement régulier en fil métallique dans la machine. Un tel approvisionnement régulier est plus facile à réaliser dans le cas de baguettes continues, de préférence enroulées en bobines.

La baguette continue doit pouvoir être fabriquée par extrusion de l'enrobage autour du fil d'âme, procédé a priori approprié pour les produits de grande longueur. Pour cela, l'enrobage doit contenir un type de liant dont les caractéristiques spécifiques permettent une fabrication par extrusion.

Simultanément, la baguette doit procurer une soudure correcte, et en particulier, les composants de soudure liés par le liant ne doivent pas être "soufflés" par la flamme, mais véritablement se rassembler en une goutte en fusion assurant un mélange correct avant dépôt sur la pièce à souder.

L'invention vise également à permettre d'utiliser des liants dont la décomposition, lors de la soudure, ne dégage que des produits inoffensifs, par exemple de l'eau et du gaz carbonique. On améliore ainsi considérablement les conditions de travail.

Pour atteindre ces objets on prévoit selon l'invention une baguette de soudage telle que définie dans la revendication 1.

Dans le cas des baguettes continues pour rechargement antiabrasion, les constituants principaux de soudure comprennent de préférence des particules de carbure de tungstène, et des particules d'un alliage dont la température de fusion est inférieure à celle du carbure de tungstène. L'alliage contient avantageusement du chrome, du silicium, du bore et du nickel.

On entend par élément à effet plastifiant toute substance qui rend l'enrobage lisse et homogène, lui conférant une flexibilité lui permettant de conditionner la baguette sous forme de bobine de dimension aisément manipulable à la main, par exemple d'un diamètre de quelques dizaines de centimètres. Un tel résultat est obtenu par exemple en utilisant un liquide miscible à l'eau ou au solvant, et ayant une très faible tension de vapeur à la température ambiante. Un liquide de ce type est par exemple la glycérine ou le glycol. Lors d'un usage avec un liant mélangé à l'eau ou au solvant, le chauffage à une température adéquate après extrusion entraîne l'élimination de l'eau ou du solvant, mais le plastifiant reste et confère au liant organique une grande flexibilité.

Le liant organique est avantageusement une poudre qui, lorsqu'elle absorbe un solvant, prend une forme qui lie les particules de constituants principaux de soudure, de façon que le mélange soit extrudable. Le solvant utilisé ne doit pas s'évaporer trop rapidement dans les conditions de température normales, mais doit au contraire rester dans le liant, jusqu'à être extrait par chauffage, après que l'extrusion soit terminée.

Dans son état final, la baguette continue selon l'invention contient le liant et le plastifiant Leur présence simultanée permet d'obtenir les qualités recherchées de la baguette. Le chauffage après extrusion doit éliminer totalement ou presque totalement le solvant, mais ne doit pas éliminer ou altérer le liant et le plastifiant.

Selon une autre caractéristique, le liant organique comprend au moins l'un des constituants suivants : hydroxyéthylméthylcellulose, galactomanose carboxyméthylcellulose. Les résultats les meilleurs ont été obtenus avec l'hydroxyéthylméthylcellulose, liant qui procure nettement le meilleur compromis entre les qualités principales recherchées pour la baguette : une flexibilité suffisante pour être bobinée, une résistance suffisante pour éviter l'apparition de ruptures d'enrobage, et un rapprochement suffisant des constituants de soudure pour éviter l'apparition de soufflage. L'utilisation de l'hydroxyéthylméthylcellulose comme liant de poudres de constituants principaux de soudure apparaît comme une caractéristique non évidente pour l'homme du métier. En effet, les baguettes de soudure rigides habituellement utilisées, et par exemple les baguettes décrites dans le brevet US 2 219 462, comprennent toujours un liant à base de silicate de soude ou de potasse. Or, la présence d'un liant silicaté est incompatible avec la présence d'hydroxyéthylméthylcellulose pour réaliser une soudure, et l'on ne pouvait pas s'attendre à un bon résultat dans le cadre de la présente invention.

Selon une autre caractéristique de l'invention, l'effet plastifiant d'un liant absorbant l'eau est obtenu par un liquide soluble à l'eau et présentant une faible tension superficielle à la température ambiante. On a utilisé avec succès la glycérine, le glycol, la triéthanolamine.

Selon l'invention, et simultanément aux compositions permettant d'obtenir un enrobage souple, on constate une amélioration sensible des qualités de souplesse en employant, dans l'enrobage, une certaine proportion de particules d'alliage sous forme sphéroïdale. On entend par particule sphéroïdale, dans la description qui suit et dans les revendications, une particule arrondie dépourvue d'angles et d'arêtes vives. De bons résultats sont obtenus en utilisant des particules réalisées par pulvérisation.

Les particules de forme sphéroïdale doivent représenter au moins 30% en volume de l'ensemble des produits de soudure. Si cette condition n'est pas remplie, l'obtention d'enrobage véritablement souple est difficile. On peut chercher à réaliser des enrobages souples avec des particules d'alliage non sphéroïdales. Il suffit pour cela d'augmenter la proportion de liants organiques. Mais alors on observe que le soudage n'est plus possible. Les particules se trouvent en effet soufflées avant d'avoir eu le temps de s'agglomérer et de fondre.

Ainsi, le liant organique doit être présent dans l'enrobage selon une proportion suffisamment grande pour permettre l'extrusion et participer aux propriétés mécaniques de la baguette, cette proportion devant toutefois être suffisamment faible pour éviter l'apparition des phénomènes de soufflage. Une proportion comprise entre 0,5 et 1,5% en poids, par rapport au total de l'enrobage est nécessaire.

Il est préférable d'utiliser un liant organique d'un type pouvant absorber au moins cinq fois son poids d'eau en gonflant. De cette manière, on facilite l'extrusion, et, après séchage, le retrait du liant provoque le rapprochement des particules de produits de soudure, améliorant la qualité de soudage.

Selon une autre caractéristique de l'invention, le fil d'âme métallique est réalisé en un métal élastique. On a utilisé avec succès un nickel semi écroui. Ainsi, lorsque des contraintes mécaniques sont appliquées sur la baguette, l'élasticité du fil d'âme répartit les déformations sur une longueur relativement importante de la baguette, évitant l'apparition de coudes qui provoquerait la cassure de l'enrobage.

Le document DE-C-874 888 décrit un procédé et dispositif pour la fabrication d'une électrode de soudage, dans lequel un enrobage est extrudé sur un fil d'âme métallique. Il apparaît toutefois qu'un tel dispositif et un tel procédé ne sont pas applicables dans le cas d'une baguette telle que celle de la présente invention, comportant un enrobage épais sur un fil d'âme mince, et ne résoud notamment pas le problème du guidage du fil d'âme lors de la fabrication de la baguette. Ainsi, selon un autre aspect de l'invention, on réalise une baguette selon l'invention par la succession des étapes définies dans la revendication 8.

D'autres objets, caractéristiques et avantages de la présente invention ressortiront de la description suivante de modes de réalisation particuliers faite en relation avec les figures jointes, parmi lesquelles :
- la figure 1 représente une baguette selon l'invention enroulée en bobine ;
- la figure 2 représente une vue en coupe transversale d'une baguette selon l'invention ; et

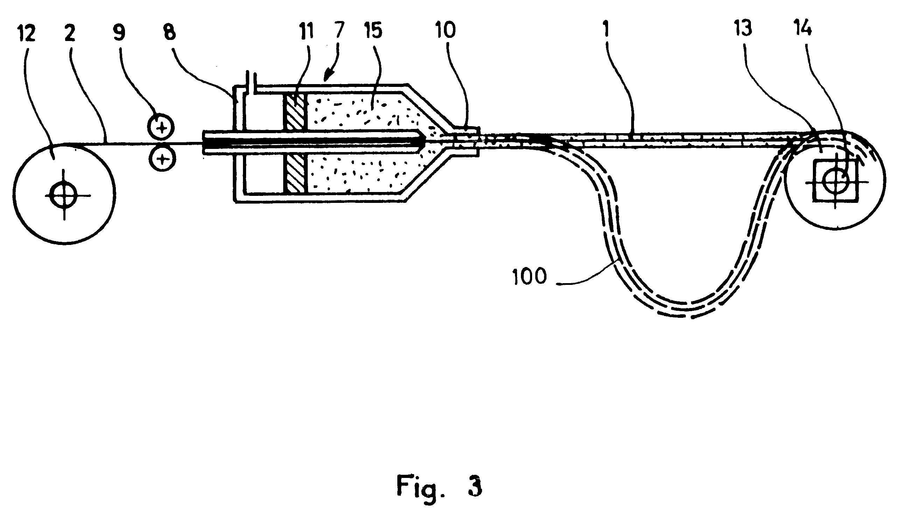

- la figure 3 représente schématiquement un dispositif pour la fabrication de la baguette selon l'invention.

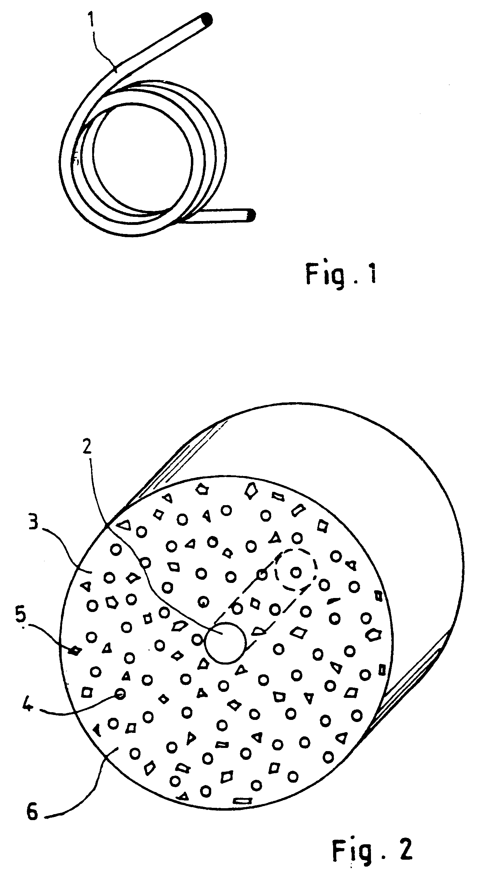

Comme le représente la figure 1, la baguette continue de soudure 1 selon l'invention est flexible selon sa longueur et peut être enroulée sur elle-même, ou sur un noyau, en forme de bobine. Dans les conditions usuelles de soudage, on peut prévoir une flexibilité suffisante pour donner à la baguette une forme de bobine dont le diamètre est de quelques dizaines de centimètres.

On a représenté sur la figure 2 une vue en coupe transversale à plus grande échelle de la baguette selon l'invention. La baguette comprend une âme métallique 2, de forme cylindrique, enveloppée d'un enrobage 3 également de forme cylindrique. Dans l'enrobage 3, qui contient les constituants principaux de soudure, on a représenté schématiquement des particules sphéroïdales 4 de produits de soudure, par exemple des particules d'alliage. Des particules de carbure de tungstène fondu 5 sont représentées avec des arêtes vives. En pratique, la plupart des particules de carbure de tungstène présentent des arêtes vives, car il est très difficile d'obtenir de telles particules avec des arêtes arrondies. Les particules 4 et 5 sont noyées dans un excipient 6 de liant et de plastifiant. Dans l'enrobage, les particules de constituants principaux de soudre, le liant et le plastifiant forment une structure généralement homogène.

On peut avantageusement choisir des particules de produits de soudure dont la granulométrie est, pour la plus grande partie, comprise entre 5 millimètres et 0,04 millimètre. Le déposant a trouvé que, si la plupart des particules de carbure de tungstène sont plus petites que 0,04 mm, la couche de rechargement obtenue à l'aide de la baguette continue n'est pas satisfaisante. Cela est probablement dû au fait que lorsque les particules sont trop petites, leur surface effective favorise des réactions chimiques pendant la soudure, réactions qui fragilisent l'alliage à base de nickel. On constate en outre que les particules de carbure de tungstène trop petites s'agglomèrent, produisant, dans la couche de rechargement, la présence de grosses particules de carbure de tungstène en faible nombre. La concentration effective en carbure de tungstène se trouve alors diminuée, et la résistance à l'abrasion est réduite. En pratique, il est conseillé d'éviter que les particules de carbure de tungstène dont la taille est inférieure à 0,04 mm représentent plus de 20% en poids de la quantité totale de carbure de tungstène.

La présence de particules trop grosses, par exemple de plus de 5 mm, rend l'extrusion difficile ou défectueuse.

Le fil d'âme métallique 2 doit, de préférence, avoir un diamètre inférieur à 1,5 millimètres. La baguette peut avoir un diamètre extérieur de 5 à 10 millimètres. Ainsi, on voit que le fil d'âme métallique occupe relativement très peu de volume par rapport à l'enrobage, de sorte que le produit présente un maximum d'éléments actifs.

Il est important que la plus grande partie du volume de la baguette continue selon l'invention soit occupée par les constituants principaux de soudure, c'est-à-dire par les produits destinés à constituer la couche de soudure ou de rechargement anti-abrasion sur une surface, et non par les produits qui fondent à une température supérieure à la température de fusion de la poudre d'alliage mélangée à la poudre de carbure de tungstène. L'âme métallique 2 est seulement un squelette sur lequel on peut assembler les constituants principaux de soudure.

On indique ci-dessous un exemple de procédé pour la réalisation des baguettes continues. Dans cet exemple, le procédé comprend les étapes suivantes:
a - mélanger les constituants principaux de soudage, sous forme de poudre, avec au moins un liant organique, au moins un solvant du liant éliminable par séchage, et au moins un élément à effet plastifiant :
b - extruder le mélange autour d'un fil d'âme métallique continu pour former une baguette continue ;
c- éliminer le solvant par chauffage approprié. Le chauffage s'effectue à une température inférieure à la température limite produisant la décomposition du liant et/ou du plastifiant.

Une composition du mélange, permettant de réaliser une baguette utilisable par exemple pour le rechargement de stabilisateurs de forage pétrolier, est la suivante :
- carbure de tungstène fondu : 60 à 68% ;
- alliage pulvérisé comprenant 1,5% de silicium, 1,5% de bore, 7% de chrome, et le reste en nickel ; l'alliage représente 32 à 40% du total ;
- hydroxyéthylméthylcellulose : 0,5 à 1,5% ;
- eau, en quantité à ajuster pour extrusion et qualité de soudage : 2 à 10% ;
- glycérine : 0,2 à 1% ;
   le total devant être égal à 100%.

Dans l'exemple ci-dessus, la température de fusion de l'alliage est d'environ 1000°C. Par contre, le cabure de tungstène a une température de fusion de 2750°C environ, tandis que le fil d'âme 2 fond à environ 1350°C. Ainsi, dans les conditions normales de soudure, le carbure de tungstène n'est pas fondu, mais il est déposé sous forme solide sur la surface à recharger, ses particules étant portées par l'alliage. Il est préférable d'utiliser un alliage dont la température de fusion est inférieure à 1100°C.

Pour la mise en oeuvre du procédé de réalisation des baguettes, on utilise une machine 7 à enrober les électrodes, machine bien connue dans la technique. Par exemple, une machine vendue par OERLIKON sous une référence telle que EP 12 convient pour cette mise en oeuvre. Cette machine 7 comprend une presse à extruder 8, des moyens 9 pour entraîner un fil d'âme à travers la presse et à travers la filière 10 d'extrusion, des moyens 11 pour pousser les constituants 15 de l'enrobage à travers la filière 10.

Selon l'invention, on adapte, à l'entrée de la machine, un dispositif pour le déroulage et l'alimentation en continu d'un fil d'âme 2 enroulé sur une bobine d'entrée 12, et on adapte, en sortie de la machine, un dispositif pour l'enroulement en continu de la baguette enrobée 1. La baguette enrobée 1 peut être enroulée sur une bobine de sortie 13. De préférence, la bobine de sortie 13 est entraînée en rotation par des moyens d'entraînement 14 pour tirer le fil hors de l'extrudeuse et le tendre pendant la traversée de la filière selon une tension déterminée. De cette manière, on arrive à entraîner correctement un fil même lorsqu'il est de petit diamètre, c'est à dire inférieur à 1,5 millimètres.

En fonction du diamètre de la baguette enrobée et du type de matière formant l'enrobage, on peut choisir notamment entre deux moyens de traction de la baguette en sortie d'extrudeuse : selon un premier moyen, les moyens d'entraînement 14 impriment à la bobine de sortie 13 un couple constant adéquat qui tend la baguette enrobée 1 entre la bobine 13 et la filière 10 ; selon un second moyen, les moyens d'entraînement 14 impriment à la bobine de sortie 13 un couple constant adéquat, mais la baguette enrobée forme par gravité une demi-boucle 100 pendante de dimension choisie, entre la bobine 13 et la filière 10, qui confère une traction adéquate du fil en sortie d'extrudeuse. Dans les deux cas, la vitesse de progression est fixée par les moyens 9 d'entraînement du fil d'âme.

La présente invention inclut les diverses variantes et généralisations contenues dans le domaine des revendications ci-après. On pourra notamment, sans sortir du cadre de l'invention, utiliser d'autres liants organiques et d'autres plastifiants. L'alliage à base de nickel peut être différent. Des solvants différents peuvent être mélangés au liant organique. L'épaisseur, la forme et la constitution de l'âme métallique peuvent être modifiées. On peut également utiliser des particules de matière dure autre que le carbure de tungstène, et ayant une température de fusion élevée. Et l'on peut librement choisir la longueur des baguettes, et par exemple fabriquer des baguettes longues de plusieurs mètres enroulées plusieurs fois en bobine, ou des baguettes courtes de quelques centimètres et présentant la même structure interne selon l'invention.

## Revendications

1. Baguette pour soudage à l'aide d'une source extérieure d'énergie, baguette constituée d'une âme métallique (2) mince revêtue d'un enrobage (3) épais comportant les constituants (4, 5) principaux de soudure sous forme de poudre, comprenant des particules de carbure de tungstène, et des particules d'un alliage dont la température de fusion est inférieure à celle du carbure de tungstène, les particules étant liés ensemble et à l'âme par un excipient (6) assurant la fonction de liant et contenant au moins un liant organique d'un type présentant la propriété d'absorber un solvant et de le restituer par évaporation, la baguette présentant une flexibilité suffisante permettant son conditionnement sous forme de baguette continue et de grande longueur enroulée en bobine manipulable à la main caractérisée en ce que la proportion de liant dans l'enrobage (3) est suffisamment faible pour éviter les phénomènes de soufflage, l'excipient contient au moins un élément à effet plastifiant, les particules, le liant organique et le plastifiant forment une structure généralement homogène, les constituants de soudure comprenant des particules de forme sphéroïdale représentant plus de 30 % en volume des constituants de soudure de l'enrobage, > le liant organique est présent dans l'enrobage selon une proportion comprise entre 0,5 et 1, 5 % en poids.

2. Baguette selon la revendication 1, caractérisée en ce que le liant organique comprend au moins l'un des constituants suivants :
- hydroryéthylméthylcellulose,
- galactomanose,
- carboxyméthylcellulose,

3. Baguette selon l'une des revendications 1 ou 2, caractérisée en ce que l'élément à effet plastifiant est un liquide soluble à l'eau et présentant une faible tension superficielle à la température ambiante, tel que la glycérine, le glycol ou la triéthanolamine.

4. Baguette selon l'une quelconque des revendications 1 à 3, caractérisée en ce que le liant organique est d'un type pouvant absorber au moins cinq fois son poids d'eau en gonflant.

5. Baguette selon l'une quelconque des revendications 1 à 4, caractérisée en ce que l'enrobage contient une proportion en poids de 0,5 à 1,5 % d'hydroxyéthylméthylcellulose, et de 0,2 à 1 % de glycérine.

6. Baguette selon l'une quelconque des revendications 1 à 5, caractérisée en ce que le fil d'âme (2) est élastique, pour répartir les déformations habituelles sur une longueur relativement importante de la baguette et éviter les coudes et les cassures de l'enrobage.

7. Baguette selon l'une quelconque des revendications 1 à 6, caractérisée en ce que les constituants principaux de soudure comprennent une pluralité de particules de carbure de tungstène et une pluralité de particules d'un alliage à base de nickel, 20 % au plus des particules de carbure de tungstène ayant une granulométrie inférieure à 0,04 mm.

8. Procédé pour la réalisation de baguettes selon l'une quelconque des revendications 1 à 7, comprenant les étapes suivantes :
a - mélanger les constituants principaux de soudage sous forme de poudre avec au moins un liant organique d'un type présentant la propriété d'absorber un solvant et de le restituer par évaporation, au moins un solvant du liant éliminable par évaporation, et au moins un élément à effet plastifiant, les constituants principaux de soudage comprenant des particules de carbure de tungstène et des et des particules d'un alliage dont la température de fusion est inférieure à celle du carbure de tungstène la proportion de liant dans l'enrobage étant suffisamment faible pour éviter les phénomènes de soufflage, les constituants de soudure comprenant des particules de forme sphéroïdale représentant plus de 30 % en volume des constituants de soudure de l'enrobage, le liant organique étant présent dans l'enrobage selon une proportion comprise entre 0,5 et 1,5 % en poids,
b - extruder le mélange autour d'un fil d'âme (2) métallique continu, les particules, le liant organique et le plastifiant formant une structure généralement homogène,
c - tirer le fil d'âme (2) en sortie d'extrudeuse (7) de telle façon que la baguette enrobée (1) forme par gravité une demi-boucle (100) pendante, entre la filière (10) et une bobine de sortie (13) sur laquelle on enroule la baguette enrobée (1), ou tirer le fil d'âme (2) en sortie d'extrudeuse (7) par des moyens d'entraînement (14) qui impriment à une bobine de sortie (13) un couple constant adéquat qui tend la baguette enrobée (1) entre la bobine (13) et la filière (10),
d - éliminer le solvant par chauffage, le chauffage s'effectuant à une température inférieure à la température limite produisant la décomposition du liant ou du plastifiant.

## Claims

1. A welding rod using an external source of energy, the said rod being constituted of a thin metal core (2) covered with a thick coating (3) having the principal welding components (4, 5) in powder form, comprising tungsten carbide particles and particles of an alloy whose melting point is lower than that of tungsten carbide, the particles being bound together and to the core by an excipient (6) acting as a binder and containing at least one organic binder of a type having the property of absorbing a solvent and of restoring it by evaporation, the rod being sufficiently flexible to enable it to be produced in the form of a continuous, very long rod wound into a coil which can be handled manually, characterised in that the proportion of binder in the coating (3) is small enough to avoid the occurrence of blowing phenomena, the excipient contains at least one element with a plasticising effect, the particles, the organic binder and the plasticiser form a generally homogeneous structure, the welding components comprise particles of spheroidal form representing more than 30% by volume of the welding components of the coating, the organic binder is present in the coating in a proportion of between 0.5 and 1.5% by weight.

2. A rod according to claim 1, characterised in that the organic binder comprises at least one of the following components :
- hydroxyethylmethyl cellulose,
- galactomanose,
- carboxynethyl cellulose.

3. A rod according to one of claims 1 or 2, characterised in that the element with a plasticising effect is a water-soluble liquid having low surface tension at ambient temperature, such as glycerine, glycol or triethanolamine.

4. A rod according to any of claims 1 to 3, characterised in that the organic binder is of a type capable of absorbing at least five times its weight of water whilst swelling.

5. A rod according to any of claims 1 to 4, characterised in that the coating contains a proportion by weight of 0.5 to 1.5% hydroxyethylmethyl cellulose, and 0.2 to 1% glycerine.

6. A rod according to any of claims 1 to 5, characterised in that the core wire (2) is elastic, so as to distribute the normal deformations over a relatively great length of rod and to avoid kinks and breaks in the coating.

7. A rod according to any of claims 1 to 6, characterised in that the principal welding components comprise a plurality of tungsten carbide particles and a plurality of particles of a nickel-based alloy, at most 20% of the tungsten carbide particles having a grain size of less than 0.04 mm.

8. A method for producing rods according to any of claims 1 to 7, comprising the following steps :
a) mixing the principal welding components in powder form with at least one organic binder of a type exhibiting the property of absorbing a solvent and restoring it by evaporation, at leat one solvent of the binder being capable of elimination by evaporation, and at least one element having a plasticising effect, the main welding components comprising tungsten carbide particles and particles of an alloy whose melting point is lower than that of tungsten carbide, the proportion of binder in the coating being small enough to avoid the occurrence of blowing phenomena, the welding components comprising particles of spheroidal form representing more than 30% by volume of the welding components of the coating, the organic binder being present in the coating in a proportion of between 0.5 and 1.5% by weight,
b) extruding the composition around a continous metal core wire (2), the particles, the organic binder and the plasticiser forming a generally homogeneous structure,
c) drawing the core wire (2) leaving the extruder (7) in such a way that the coated rod (1) forms, by gravity, a hanging half-loop (100) between the die (10) and an output coil (13) into which the coated rod (1) is wound, or drawing the core wire (2) leaving the extruder (7) by entrainment means (14) which impart to the output coil (13) a sufficient constant torque to stretch the coated rod (1) between the coil (13) and the die (10),
d) removing the solvent by heating, this heating taking place at a temperature below the limiting temperature which would cause the decomposition of the binder or the plasticiser.

## Patentansprüche

1. Stab zum Löten bzw. Schweißen mit Hilfe einer äußeren Energiequelle, wobei der Stab aus einer dünnen metallischen Seele (2) aufgebaut ist, die mit einer dicken Umhüllung (3) überzogen ist, welche die Hauptbestandteile (4, 5) des Löt- bzw. Schweißmittels in Form eines Pulvers aufweist, das Teilchen Von Wolframkarbid und Teilchen einer Legierung enthält, deren Schmelztemperatur geringer ist als diejenige des Wolframkarbids, wobei die Teilchen untereinander und mit der Seele durch eine Trägersubstanz (6) verbunden sind, die die Funktion eines Bindemittels hat und die zumindest ein organisches Bindemittel eines Typs aufweist, der die Eigenschaft hat, ein Lösungsmittel zu absorbieren und es durch Verdampfung wieder freizugeben, und wobei der Stab eine ausreichende Flexibilität aufweist, um seine Konditionierung in Form eines kontinuierlichen Stabes großer Länge zu ermöglichen, der auf eine Spule aufgerollt und manuell handhabbar ist,
**dadurch gekennzeichnet, daß**
der Anteil des Bindemittels in der Umhüllung (3) genügend klein ist, um das Phänomen des Verblasens zu verhindern, die Trägersubstanz zumindest ein Element mit plastifizierender Wirkung aufweist, die Teilchen, das organische Bindemittel und der Plastifikator eine im wesentlichen homogene Struktur bilden, die Bestandteile des Löt- bzw. Schweißmittels Teilchen mit sphäroidischer Form enthalten, die mehr als 30 Vol.-% der Bestandteile des Schweiß- bzw. Lötmittels der Umhüllung ausmachen, und das organische Bindemittel in der Umhüllung in einer Menge zwischen 0,5 und 1,5 Gew.-% vorliegt.

2. Stab nach Anspruch 1, dadurch gekennzeichnet, daß das organische Bindematerial zumindest einen der folgenden Bestandteile aufweist:
- Hydroxyethylmethylcellulose
- Galactomanose
- Carboxymethylcellulose

3. Stab nach einem der Ansprüche 1 oder 2, dadurch gekennzeichnet, daß das Element mit plastifizierender Wirkung eine in Wasser lösliche Flüssigkeit ist, die eine schwache Oberflächenspannung bei Umgebungstemperatur aufweist, wie Glyzerin, Glykol oder Triäthanolamin.

4. Stab nach einem der Ansprüche 1 bis 3, dadurch gekennzeichnet, daß das organische Bindemittel von einem Typ ist, der zumindest fünf mal sein Gewicht an Wasser unter Anschwellung absorbieren kann.

5. Stab nach einem der Ansprüche 1 bis 4, dadurch gekennzeichnet, daß die Umhüllung einen Volumenanteil von 0,5 bis 1,5 % Hydroxyethylmethylcellulose und 0,2 bis 1 % Glyzerin enthält.

6. Stab nach einem der Ansprüche 1 bis 5, dadurch gekennzeichnet, daß die Drahtseele (2) elastisch ist, um die üblichen Deformationen über eine relativ große Länge des Stabes zu verteilen und um Knicke und Brüche der Umhüllung zu vermeiden.

7. Stab nach einem der Ansprüche 1 bis 6, dadurch gekennzeichnet, daß die Hauptbestandteile des Schweiß- bzw. Lötmittels eine Vielzahl von Teilchen aus Wolframkarbid und eine Vielzahl von Teilchen einer Legierung auf der Basis von Nickel aufweisen, wobei höchstens 20 % der Teilchen aus Wolframkarbid eine Granulometrie unter 0,04 mm aufweisen.

8. Verfahren zur Herstellung von Stäben nach einem der Ansprüche 1 bis 7, das die folgenden Schritte aufweist:
a) Mischen der Hauptbestandteile des Schweiß- bzw. Lötmittels in Form eines Pulvers mit zumindest einem organischen Bindemittel eines Typs, der die Eigenschaft aufweist, ein Lösungsmittel zu absorbieren und es durch Verdampfung wieder freizugeben, mit zumindest einem Lösungsmittel des Bindemittels, das durch Verdampfung entfernt werden kann, und mit zumindest einem Element mit plastifizierender Wirkung, wobei die Hauptbestandteile des Löt- bzw. Schweißmittels Teilchen aus Wolframkarbid und Teilchen einer Legierung enthalten, deren Schmelztemperatur geringer ist als diejenige des Wolframkarbids, wobei der Anteil des Bindemittels in der Umhüllung genügend klein ist, um das Phänomen des Verblasens zu vermeiden, wobei die Bestandteile des Löt- bzw. Schweißmittels Teilchen mit sphäroidischer Form enthalten, die mehr als 30 Vol.- % der Bestandteile des Schweiß- bzw. Lötmittels der Umhüllung ausmachen und wobei das organische Bindemittel in der Umhüllung in einer Menge zwischen 0,5 und 1,5 Gew.- % vorliegt,
b) Extrudieren des Gemisches um eine metallische kontinuierliche Drahtseele (2), wobei das organische Bindemittel und der Plastifikator eine im wesentlichen homogene Struktur bilden.
c) Ziehen der Drahtseele (2) am Ausgang des Extruders derart, daß der umhüllte Stab (1) durch die Gravitationseinwirkung eine herabhängende Halbschlinge (100) zwischen der Ziehdüse (10) und einer Ausgangsspule (13) bildet, auf welche der umhüllte Stab (1) aufgerollt wird, oder Ziehen der Drahtseele (2) am Ausgang des Extruders mit Antriebseinrichtungen (14), die einer Ausgangsspule (13) ein geeignetes konstantes Drehmoment verleihen, um den umhüllten Stab (1) zwischen der Spule (13) und der Ziehdüse (10) zu spannen.
d) Entfernen des Lösungsmittels durch Erwärmen, wobei die Erwärmung bei einer Temperatur unterhalb der Grenztemperatur durchgeführt wird, die zu einer Zersetzung des Bindematerials oder des Plastifikators führt.
